# EUROPÄISCHE PATENTANMELDUNG

(11) **EP 4 353 387 A1**
(43) Veröffentlichungstag der Anmeldung: **17.04.2024**
(21) Anmeldenummer: 22201098.5
(22) Anmeldetag: 12.10.2022
(51) Int. Cl.: B23B 45/02, B23B 31/06, B25F 5/00

(54) **VERFAHREN ZUM HALTEN EINER SPINDEL EINER MOBILEN WERKZEUGMASCHINE**

(71) Anmelder: Hilti Aktiengesellschaft, 9494 Schaan (LI)
(72) Erfinder: Wörz, Joachim, 86929 Penzing (DE)
(74) Vertreter: Hilti Aktiengesellschaft Corporate Intellectual Property

(57) **Zusammenfassung**

Die Erfindung betrifft ein Verfahren (20) zum Halten einer Spindel (15) einer mobilen Werkzeugmaschine (1), um ein Öffnen und/oder Schließen einer Werkzeugaufnahme (2) durch ein Verdrehen eines Bedienteils (14) der Werkzeugaufnahme (2) zu der Spindel (15) zu ermöglichen, wobei die Spindel (15) mit einem Elektromotor (5) rotationsgekoppelt ist, aufweisend die Schritte:
Erfassen (S2) einer Rotationsrichtung der Spindel (15) und/oder des Elektromotors (5), während eine Soll-Winkelgeschwindigkeit Null ist; und
Ansteuern (S4) des Elektromotors (5) zum Erzeugen eines Drehmoments, welches der erfassten Rotation entgegen gerichtet ist.

## Beschreibung

### GEBIET DER ERFINDUNG

Die vorliegende Erfindung betrifft ein Verfahren zum Halten einer Spindel einer mobilen Werkzeugmaschine, ein Computerprogrammprodukt sowie eine mobile Werkzeugmaschine.

Mobile Werkzeugmaschinen zeichnen sich durch Werkzeugaufnahmen zum Wechseln eines Werkzeugs aus. Ein sogenanntes 3-Backen-Futter ist ein bekanntes Beispiel für eine Werkzeugaufnahme für mobile Werkzeugmaschinen vom Bohrmaschinentyp. Beispielsweise für handgeführte Sägemaschinen oder Schleifmaschinen sind Schraubsicherungen verbreitet.

Zum Aufnehmen oder Entnehmen eines Werkzeugs wird ein Teil der Werkzeugaufnahme zu einer Spindel der Werkzeugmaschine rotiert bzw. verdreht. Um das dazu nötige Drehmoment werkzeuglos aufbringen zu können, bedarf es Spindel-seitig eines Mittels zum Gegenhalten. Es gibt verschiedene Blockier-Mechanismen zum Blockieren der Spindel. Ein Beispiel hierfür ist ein Klemmmechanismus mit Klemmrollen, welche angeordnet sind, um infolge eines Angetrieben-Werdens durch die Werkzeugaufnahme radial zu verklemmen und infolge eines Angetrieben-Werdens durch die Spindel gelöst zu werden. Wegen der wirksamen Kräfte und Drehmomente verschleißen die Teile des Blockier-Mechanismus.

Vor diesem Hintergrund besteht eine Aufgabe der vorliegenden Erfindung darin, ein Mittel zum Gegenhalten der Spindel mit reduziertem Verschleiß bereitzustellen.

### OFFENBARUNG DER ERFINDUNG

Demgemäß wird ein Verfahren zum Gegenhalten einer Spindel einer mobilen Werkzeugmaschine vorgeschlagen, um ein Öffnen und/oder Schließen einer Werkzeugaufnahme durch ein Verdrehen wenigstens eines Bedienteils der Werkzeugaufnahme zu der Spindel zu ermöglichen. Dabei ist die Spindel mit einem Elektromotor der Werkzeugmaschine rotations-gekoppelt. Das vorgeschlagene Verfahren weist die folgenden Schritte auf: Erfassen einer Rotationsrichtung der Spindel und/oder des Elektromotors, während eine Soll-Winkelgeschwindigkeit Null ist. Und Ansteuern des Elektromotors zum Erzeugen eines Drehmoments durch den Elektromotor, welches der erfassten Rotation entgegen gerichtet ist.

Mittels des Verfahrens wird der Verschleiß-anfällige Blockier-Mechanismus durch ein Steuerungsverfahren und/oder Regelungsverfahren bzw. Rückmeldungssteuerungsverfahren ersetzt. Der Blockier-Mechanismus kann somit entfallen. In der Folge wird eine mobile Werkzeugmaschine mit reduzierter Verschleiß-Anfälligkeit erhalten.

Die Soll-Winkelgeschwindigkeit ergibt sich vorzugsweise aus einem Betätigungszustand eines Bedienelements.

Vorzugsweise sieht das vorgeschlagene Verfahren eine der folgenden vorteilhaften Weiterbildungen oder eine Kombination daraus vor.

Gemäß einer bevorzugten Ausführungsform enthält das Ansteuern des Elektromotors: Erzeugen eines Stromsignals an den Elektromotor, das zum Erzeugen des Drehmoments durch den Elektromotor geeignet ist.

Das Verfahren weist optional auf: Bereitstellen einer Vorschrift, insbesondere einer Rechenvorschrift und/oder einer Tabelle, welche einen Sollwert des Drehmoments, einer Stromstärke und/oder einer Spannung in Abhängigkeit eines Betrags der erfassten Rotation und/oder einen Stellwert einer Versorgungsschaltung des Elektromotors in Abhängigkeit des Betrags der erfassten Rotation angibt. Dabei enthält das Ansteuern vorzugsweise, den Elektromotor zum Erzeugen des durch die Vorschrift angegebenen Betrags des Drehmoments anzusteuern. Mittels der Vorschrift kann das Gegenhalten durch den Elektromotor optimiert werden.

Die Tabelle kann beispielsweise für mehrere unterschiedliche Rotationswinkel und/oder für mehrere unterschiedliche Winkelgeschwindigkeiten jeweils einen Drehmomentwert und/oder einen Stromstärkewert und/oder einen Spannungswert und/oder einen Stellwert vorgeben. Es können mehrere Tabellen für unterschiedliche Szenarien, wie für unterschiedliche Umgebungstemperaturen und/oder für unterschiedliche Anbauten an die Werkzeugmaschine, vorgesehen werden. Die Option hat den Vorteil, mit geringem Aufwand durch eine Steuervorrichtung der Werkzeugmaschine umsetzbar zu sein.

Die Rechenvorschrift kann insbesondere als eine Gleichung und/oder eine Funktion implementiert werden. Diese Option hat den Vorteil, dass der Betrag des erzeugbaren Drehmoments sehr fein bestimmbar ist.

Die Vorschrift ist vorzugsweise dazu ausgelegt, dass ein Aufschwingen und/oder ein Schwingen um eine Nulllage verhindert oder vermieden wird. Beispielsweise können eine Hysterese und/oder ein Dämpfungsglied vorgesehen werden.

Das Ansteuern des Elektromotors kann beispielsweise ein Vorgeben insbesondere eines Drehmomentwerts, eines Stromstärkewerts und/oder eines Spannungswerts an den Elektromotor beinhalten.

Das Ansteuern des Elektromotors kann insbesondere ein Betreiben einer Versorgungsschaltung mittels des Stellwerts enthalten.

Das Erfassen der Rotationsrichtung der Spindel und/oder des Elektromotors kann anwendungsbezogene Vorteile haben. Beispielswiese können Bauraumvorteile oder ein Vorhandensein eines Rotationssensors, insbesondere an dem Elektromotor, genutzt werden.

Das Erfassen der Rotationsrichtung enthält vorzugsweise ein Erfassen einer Rotationswinkels. Somit kann ein Rotieren der Spindel und/oder des Elektromotors auch bei vergleichsweise niedrigen Winkelgeschwindigkeiten zuverlässig erkannt werden.

Das Erfassen der Rotationsrichtung enthält vorzugsweise ein Erfassen einer Ist-Winkelgeschwindigkeit. Somit kann der aktuelle Rotationszustand präzise eingeschätzt und zum Bemessen des Drehmoments verwendet werden.

Vorzugsweise gibt die Vorschrift den Sollwert und/oder den Stellwert in Abhängigkeit eines Betrags der Ist-Winkelgeschwindigkeit an, um die erfasste Winkelgeschwindigkeit rasch auf null zu bringen.

Der Elektromotor wird vorzugsweise zum Beenden der erfassten Rotation angesteuert. Diese Option ist unempfindlich gegenüber einem Schwingen um eine Nulllage. Außerdem kann es für den Zweck, zum Öffnen oder Schließen der Werkzeugaufnahme gegenzuhalten, ausreichen, dass ein Durchdrehen der Spindel bzw. des Elektromotors unterbunden wird.

Der Elektromotor wird optional zum Rückstellen der erfassten Rotation angesteuert. Diese Option fühlt sich für einen Verwender steif an, und hat daher eine hohe Kundenakzeptanz.

Um beispielsweise auf ein zeitlich veränderliches Bedienen des Bedienteils der Werkzeugaufnahme anzusprechen, werden die vorgesehenen Schritte vorzugsweise wiederholt ausgeführt. Beispielsweise werden die Schritte in einer Schleife ausgeführt, oder zu bestimmten Zeitpunkten ausgeführt.

Das Verfahren kann ausgelöst ausgeführt werden, beispielsweise infolge eines Drückens eines Knopfes oder eines anderen Betätigens eines Betätigungselements. Das Verfahren kann auch konstant oder wiederholt ausgeführt werden, solange die Werkzeugmaschine eingeschaltet ist. Das Verfahren kann auch konstant oder wiederholt ausgeführt werden, solange die Werkzeugmaschine mit einer Stromquelle, wie einem Akkumulator, verbunden ist.

Weiterhin wird ein Computerprogrammprodukt vorgeschlagen, welches Befehle umfasst, die bei der Ausführung des Programms durch einen Computer diesen veranlassen, das vorstehend beschriebene Verfahren auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Vorgeschlagen wird weiters eine mobile Werkzeugmaschine. Diese weist auf: einen Elektromotor; eine Spindel, die mit dem Elektromotor rotationsgekoppelt ist; eine Werkzeugaufnahme, die durch ein Verdrehen eines Bedienteils der Werkzeugaufnahme zu der Spindel öffenbar und/oder schließbar ist; einen Rotationssensor, der zum Erfassen einer Rotation der Spindel und/oder des Elektromotors geeignet und angeordnet ist; und eine Steuervorrichtung, die mit dem Rotationssensor und dem Elektromotor verschaltet ist, und die zum Ausführen des Verfahrens zum Gegenhalten der Spindel der mobilen Werkzeugmaschine eingerichtet ist.

Die für das vorgeschlagene Verfahren beschriebenen Ausführungsformen und Merkmale gelten für die vorgeschlagene Werkzeugmaschine entsprechend.

Die Werkzeugaufnahme ist vorzugsweise zur Aufnahme eines Werkzeugs geeignet. Die Werkzeugaufnahme ist vorzugsweise zum Übertragen rotatorischer Leistung zwischen der Spindel und dem Werkzeug geeignet und/oder verschaltet, wie rotationsgekoppelt.

Gemäß einer bevorzugten Ausführungsform ist der Elektromotor ein bürstenloser Gleichstrommotor. Diese Bauart zeichnet sich durch niedrigen Verschleiß aus.

Der Rotationssensor ist vorzugsweise zum Erfassen eines Drehwinkels und/oder einer Winkelgeschwindigkeit ausgelegt. Der Rotationssensor kann als ein unmittelbar Rotation-messendes Bauteil oder eine solche Baugruppe vorhanden sein. Der Rotationssensor kann auch als Funktion des Elektromotors ausgeführt sein, welche in Abhängigkeit eines Strom- und/oder Spannungsverlaufs des Elektromotors auf eine Rotation desselben rückschließt.

Besonders bevorzugt ist der Rotationssensor als ein Hall-Sensor ausgeführt, welcher insbesondere eine Rotation eines Rotors oder einer Welle des Elektromotors direkt erfassend angeordnet ist.

Die mobile Werkzeugmaschine kann eine Handwerkzeugmaschine, beispielsweise eine Bohrmaschine, eine Schraubmaschine, eine Meißelmaschine, eine Schleifmaschine, eine Sägemaschine oder dergleichen sein. Denkbar ist auch, dass die mobile Werkzeugmaschine ein Bauroboter ist oder einen Bauroboter umfasst. Die mobile Werkzeugmaschine kann einen Manipulator, insbesondere einen mehrachsigen Manipulator, aufweisen. Die mobile Werkzeugmaschine kann eine Antriebsvorrichtung zum Antrieb eines Werkzeugs, beispielsweise eines Bohrers, eines Meißels, eines Saugers oder dergleichen aufweisen.

Die mobile Werkzeugmaschine kann zur Bearbeitung von Beton und / oder Metall eingerichtet sein. Sie kann zum Bohren, Meißeln, Sägen und / oder Schleifen
ausgebildet sein.

Allgemein kann die mobile Werkzeugmaschine zur Ausführung von Arbeiten im Hoch- und/oder Tiefbau eingerichtet sein. Denkbar ist, dass sie nicht für einen Einsatz im Bergbau eingerichtet ist.

Die mobile Werkzeugmaschine kann tragbar sein; sie kann beispielsweise ein Gewicht von weniger als 50 kg, insbesondere von weniger als 25 kg, aufweisen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

### KURZE BESCHREIBUNG DER FIGUREN

- Fig. 1: zeigt eine mobile Werkzeugmaschine gemäß einer Ausführungsform der Erfindung; und
- Fig. 2: zeigt ein Ablaufdiagramm eines Verfahrens gemäß der Erfindung.

In den Figuren sind gleiche oder funktionsgleiche Elemente mit denselben Bezugszeichen versehen worden, sofern nichts anderes angegeben ist.

### AUSFÜHRUNGSFORMEN DER ERFINDUNG

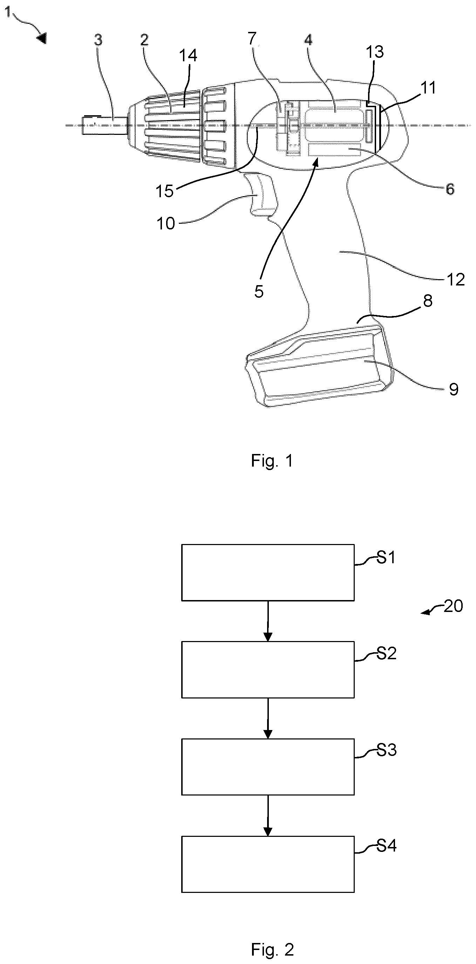

Die Fig. 1 zeigt eine mobile Werkzeugmaschine 1. Die Werkzeugmaschine 1 ist beispielhaft eine Handwerkzeugmaschine, genauer gesagt eine Bohrmaschine. Weitere bevorzugte Ausführungsformen umfassen eine Schleifmaschine oder eine Sägemaschine.

Die Werkzeugmaschine 1 hat eine Werkzeugaufnahme 2 zur Aufnahme eines Werkzeugs 3. Das Werkzeug 3 ist über die Werkzeugaufnahme 2 durch einen Rotor 4 eines Elektromotors 5 rotationsantreibbar.

Der Elektromotor 5 ist ein bürstenloser Gleichstrommotor. Er hat einen Stator 6, der mit einem elektrischen Strom beaufschlagbar ist, um ein Drehmoment zwischen dem Stator 6 und dem Rotor 4 zu erzeugen.

Der Elektromotor 5 und die Werkzeugaufnahme 2 sind mit einem Untersetzungsgetriebe 7 schaltbar oder nicht schaltbar rotations-gekoppelt.

Die Werkzeugaufnahme 2, der Elektromotor 5, das Untersetzungsgetriebe 7, eine Aufnahme 8 für einen wechselbaren Akkumulator 9, wenigstens ein Betätigungselement 10 und eine Steuervorrichtung 11 sind durch ein Gehäuse 12 gelagert und in der üblichen Weise funktionsverbunden.

Die Werkzeugmaschine 1 ist kabellos betreibbar. Der Akkumulator 9 weist Lithium auf.

Die Werkzeugmaschine 1 ist als tragbares Gerät ausgebildet. Sie weist ein Gewicht zwischen 0,5 und 15 kg und allgemein von weniger als 25 kg auf.

Die Steuervorrichtung enthält wenigstens einen Hallsensor 13, der zum Erfassen eines Rotationswinkels und einer Winkelgeschwindigkeit des Rotors 4 relativ zu dem Gehäuse 12 ausgelegt und angeordnet ist.

Die Werkzeugaufnahme 2 hat einen radial außen angeordneten Griff 14, der ein Teil der Werkzeugaufnahme 2 ist. Von dem Elektromotor 5 aus gesehen ist dem Untersetzungsgetriebe 7 eine Spindel 15 nachgeschaltet, welche zum rotatorischen Leistung-Übertragen auf die Werkzeugaufnahme 2 geeignet ist.

Durch ein Verdrehen des Griffs 14 gegenüber der Spindel 15 kann ein (nicht dargestelltes) Futter der Werkzeugaufnahme 2 geöffnet und/oder geschlossen werden.

Die Steuervorrichtung 11 ist dazu eingerichtet, ein Computerprogramm auszuführen, dessen Befehle die Steuervorrichtung dazu bringen, ein in der Fig. 2 dargestelltes Verfahren 20 auszuführen.

Insbesondere hat die Steuervorrichtung 11 beispielsweise eine Auswertelogik, die zum Auswerten eines Sensorsignals des Hallsensors 13 eingerichtet ist, eine Rechenlogik zum Ausführen von Verfahren und eine Ansteuerlogik zum Ansteuern des Elektromotors 5. Diese Konfiguration ist ein Beispiel, und es ist insbesondere auch eine vollintegrierte Schaltung vorsehbar.

Ist eine Soll-Winkelgeschwindigkeit des Elektromotors 5 null, beispielsweise weil das Betätigungselement 10 nicht betätigt wird, wird ein erster Schritt S1 ausgeführt. In dem Schritt S1 wird das Verfahren 20 beispielsweise gestartet. Der Schritt S1 wird vorzugsweise in festen Intervallen ausgeführt, beispielsweise mit einer Häufigkeit von 20 Hz.

In einem nächsten Schritt S2 wird durch den Hallsensor 13 ein Rotationszustand des Rotors 4 gegenüber dem gehäusefesten Hallsensor 13 erfasst. Der Rotationszustand kann insbesondere einen Rotationsvorgang oder einen Nicht-Rotationsvorgang annehmen.

Dabei erfasst der die Steuervorrichtung 11 einen Rotationswinkel zwischen dem Rotor 4 und dem Gehäuse 12.

Vorzugsweise erfasst die Steuervorrichtung 11 eine absolute Änderung des Rotationswinkels seit einem Einschalten der Werkzeugmaschine 1, einem letzten Ausschalten des Elektromotors 5 und/oder einem Verbinden des Akkumulators 9 mit der Aufnahme 8.

Weiters erfasst die Steuervorrichtung 11 eine Ist-Winkelgeschwindigkeit zwischen dem Hallsensor 13 und dem Gehäuse 12.

Weil das Untersetzungsgetriebe 7 zwischen die Spindel 15 und den Rotor 4 geschaltet ist, ist der Hallsensor 13 mit Vorteil sehr empfindlich für eine Rotation der Spindel 15 gegenüber dem Gehäuse 12.

In einem nächsten Schritt S3 wird eine Vorschrift bereitgestellt. Dazu wird vorzugsweise eine Tabelle aus einem Speicher der Steuervorrichtung 11 geladen und/oder ausgelesen.

Die Steuervorrichtung 11 erhält aus der Vorschrift einen Drehmomentwert, welcher einem Beenden der Ist-Winkelgeschwindigkeit angemessen ist. Die Drehmomentwerte der Vorschrift sind vorliegend dazu bemessen, einen Rotationsvorgang der Spindel zu beenden.

Optional sind die Drehmomentwerte der Vorschrift sogar zu einem Rückstellen der Spindel bemessen.

Es wird also mittels der Vorschrift ein Drehmomentwert erhalten, welcher der erfassen Ist-Winkelgeschwindigkeit angemessen ist.

In einem Schritt S4 wird dann der Elektromotor 5 angesteuert, um ein Drehmoment zu erzeugen, welches einer erfassten Rotation entgegen gerichtet ist. Dazu wird der Elektromotor 5 mit dem erhaltenen Drehmomentwert angesteuert.

Der Drehmomentwert ist vorzugsweise als ein Spannungswert und/oder ein Stromstärkewert ausgeführt. Alternativ wird ein Stellwert und/oder ein Betriebswert vorgeschlagen, welcher zum Betreiben einer zwischen den Akkumulator 9 und den Elektromotor 5 geschalteten (nicht dargestellten) Versorgungsschaltung zum Erzeugen des zum Beenden der Rotation angemessenen Drehmoments geeignet ist.

Wird in dem Schritt S1 eine Rotation der Spindel 15 erfasst, welche nicht durch ein Ansteuern des Elektromotors 5 verursacht ist, wird somit in Schritt S4 der Elektromotor 5 angesteuert, um diese tatsächliche Rotation zu beenden. Der Elektromotor 5 bewirkt damit ein Halten der Spindel 15.

Dreht ein Verwender an dem Griff 14 zum Öffnen oder Schließen der Werkzeugaufnahme 2, und wird dadurch die Spindel 15 rotiert, hält der Elektromotor 5 somit rotatorisch einen Teil der Werkzeugaufnahme 2 fest. In der Folge kann ein Werkzeugwechsel schnell und sicher für einen Verwender durch den Verwender durchgeführt werden. Das Verfahren 20 bewirkt also einen elektrischen Spindellock bzw. ein elektrisches Halten der Spindel 15. Dabei kommt es nicht zu einem Verschleiß der Spindel 15 oder des Elektromotors 5.

Das Verfahren 20 ist somit geeignet und wirksam zum Halten einer Spindel der mobilen Werkzeugmaschine 1, um ein Öffnen und/oder Schließen der Werkzeugaufnahme 2 durch ein Verdrehen eines Bedienteils der Werkzeugaufnahme 2 zu der Spindel 15 zu ermöglichen.

Obwohl die vorliegende Erfindung anhand von Ausführungsbeispielen beschrieben wurde, ist sie vielfältig modifizierbar.

### BEZUGSZEICHENLISTE

- 1: Werkzeugmaschine
- 2: Werkzeugaufnahme
- 3: Werkzeug
- 4: Rotor
- 5: Elektromotor
- 6: Stator
- 7: Untersetzungsgetriebe
- 8: Aufnahme
- 9: Akkumulator
- 10: Betätigungselement
- 11: Steuervorrichtung
- 12: Gehäuse
- 13: Hallsensor
- 14: Griff
- 15: Spindel
- 20: Verfahren

- S: Schritt

## Patentansprüche

1. Verfahren (20) zum Halten einer Spindel (15) einer mobilen Werkzeugmaschine (1), um ein Öffnen und/oder Schließen einer Werkzeugaufnahme (2) durch ein Verdrehen eines Bedienteils (14) der Werkzeugaufnahme (2) zu der Spindel (15) zu ermöglichen, wobei die Spindel (15) mit einem Elektromotor (5) rotationsgekoppelt ist, aufweisend die Schritte:
Erfassen (S2) einer Rotationsrichtung der Spindel (15) und/oder des Elektromotors (5), während eine Soll-Winkelgeschwindigkeit Null ist; und
Ansteuern (S4) des Elektromotors (5) zum Erzeugen eines Drehmoments, welches der erfassten Rotation entgegen gerichtet ist.

2. Verfahren nach Anspruch 1, wobei das Verfahren aufweist
Bereitstellen (S2) einer Vorschrift, insbesondere einer Rechenvorschrift und/oder einer Tabelle, welche einen Sollwert des Drehmoments und/oder einen Stellwert einer Versorgungsschaltung des Elektromotors (5) in Abhängigkeit eines Betrags der erfassten Rotation angibt;
wobei das Ansteuern (S4) vorzugsweise enthält, den Elektromotor (5) zum Erzeugen des durch die Vorschrift angegebenen Betrags des Drehmoments anzusteuern und/oder die Versorgungsschaltung mit dem Stellwert zu betreiben.

3. Verfahren nach Anspruch 2,
wobei das Erfassen (S1) der Rotationsrichtung ein Erfassen einer Ist-Winkelgeschwindigkeit enthält; und
wobei die Vorschrift den Betrag des Drehmoments in Abhängigkeit eines Betrags der Ist-Winkelgeschwindigkeit angibt.

4. Verfahren nach einem der Ansprüche 1 - 3, wobei der Elektromotor (5) angesteuert wird zum Beenden der erfassten Rotation.

5. Verfahren nach einem der Ansprüche 1 - 4, wobei der Elektromotor (5) angesteuert wird zum Rückstellen der erfassten Rotation.

6. Verfahren nach einem der Ansprüche 1 - 5, wobei die Schritte wiederholt ausgeführt werden.

7. Computerprogrammprodukt, umfassend Befehle, die bei der Ausführung des Programms durch einen Computer diesen veranlassen, das Verfahren nach einem der Ansprüche 1 - 6 auszuführen.

8. Mobile Werkzeugmaschine (1), aufweisend:
einen Elektromotor (5),
eine Spindel (15), die mit dem Elektromotor (5) rotationsgekoppelt ist,
eine Werkzeugaufnahme (2), die durch ein Verdrehen eines Bedienteils (14) der Werkzeugaufnahme (2) zu der Spindel (15) öffenbar und/oder schließbar ist,
einen Rotationssensor (13), der zum Erfassen einer Rotation der Spindel (15) und/oder des Elektromotors (5) geeignet und angeordnet ist, und
eine Steuervorrichtung (11), die mit dem Rotationssensor (13) und dem Elektromotor (5) verschaltet ist und die zum Ausführen des Verfahrens (20) nach einem der Ansprüche 1 - 6 eingerichtet ist.

9. Mobile Werkzeugmaschine (1) nach Anspruch 8, wobei der Elektromotor (5) ein bürstenloser Gleichstrommotor ist.

10. Mobile Werkzeugmaschine (1), wobei der Rotationssensor (13) zum Erfassen eines Drehwinkels und/oder einer Winkelgeschwindigkeit ausgelegt ist, und insbesondere wenigstens einen Hall-Sensor enthält.
